# EUROPEAN PATENT APPLICATION

(11) **EP 3 354 459 A1**
(43) Date of publication of application: **01.08.2018**
(21) Application number: 17170622.9
(22) Date of filing: 11.05.2017
(51) Int. Cl.: B33Y 10/00, B29C 64/112, B29C 64/194

(54) **THREE-DIMENSIONAL PRINTING METHOD**

(30) Priority: 26.01.2017 CN 201710061749
(71) Applicant: XYZprinting, Inc., New Taipei City 22201 (TW); Kinpo Electronics, Inc., New Taipei City 22201 (TW)
(72) Inventor: Hsu, Che-Ming, 22201 Shenkeng Dist., New Taipei City (TW)
(74) Representative: 2K Patentanwälte Blasberg Kewitz & Reichel

(57) **Abstract**

A 3D printing method adapted to a 3D printing apparatus (100) to print a 3D object (200) is provided. The 3D object includes at least one forming layer. The 3D printing apparatus includes a platform (160), a nozzle module (110), a roller (120) and a curing module (140). The 3D printing method includes: setting an initial height of the roller relative to the platform and setting a moving pitch in height of the roller relative to the platform according to design data of the 3D object; spraying at least one layer of a liquid forming material on the platform by the nozzle module; curing the liquid forming material into a first forming layer by the curing module; spraying the liquid forming material on the first forming layer; and levelling the liquid forming material on the first forming layer by the roller.

## Description

### BACKGROUND

### Technical Field

The disclosure relates to a three-dimensional printing method.

### Description of Related Art

Along with quick development of technology, different methods for constructing three-dimensional (3D) models by using additive manufacturing technology such as layer-by-layer model constructing, etc. have been developed. Generally, the additive manufacturing technology converts design data of a 3D model constructed with computer aided design (CAD), etc. into a plurality of continuously stacked thin (quasi two-dimensional) cross-section layers.

Presently, methods for forming a plurality of thin cross-section layers have been developed. For example, a moving platform is set to be disposed a liquid forming material thereon, and a light source is driven to move along X-Y coordinates to irradiate the liquid forming material according to X-Y-Z coordinates constructed based on the design data of the 3D model, so as to cure the liquid forming material to form a correct cross-section layer shape. Then, as the moving platform is moved along a Z-axis, the liquid forming material is cured layer-by-layer and stacked to form a 3D object.

### SUMMARY

The disclosure is directed to a three-dimensional (3D) printing method of a 3D printing apparatus, by which a printing size of a 3D object is guaranteed.

An embodiment of the disclosure provides a 3D printing method adapted to a 3D printing apparatus to print a 3D object. The 3D object includes at least one forming layer. The 3D printing apparatus includes a platform, a nozzle module, a roller and a curing module. The 3D printing method includes: setting an initial height of the roller relative to the platform and setting a moving pitch in height of the roller relative to the platform according to design data of the 3D object, where the initial height and the moving pitch in height are equal to a positive integer multiple of a thickness of the forming layer; spraying at least one layer of a liquid forming material on the platform by the nozzle module; curing the at least one layer of the liquid forming material into a first forming layer by the curing module; spraying at least one layer of the liquid forming material on the first forming layer by the nozzle module; and levelling the at least one layer of the liquid forming material on the first forming layer by the roller.

According to the above description, based on the 3D printing method, an additional compensation operation is provided to the shrinking first forming layer, i.e. the liquid forming material is again sprayed on the first forming layer to compensate the inadequate thickness thereof, by which a surface profile of a top part of the first forming layer is effectively levelled and levelness thereof is improved (a redundant part is removed and an inadequate part is compensated), so that during the process that the 3D printing apparatus smoothly prints the 3D object, the thickness and quality of each forming layer are guaranteed, so as to provide a convenient control method to overcome adverse effects caused by assembling tolerance and curing conditions of the material and related components.

In order to make the aforementioned and other features and advantages of the disclosure comprehensible, several exemplary embodiments accompanied with figures are described in detail below.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.
FIG. 1 is a schematic diagram of a three-dimensional (3D) printing apparatus according to an embodiment of the disclosure.
FIG. 2 is a flowchart illustrating a 3D printing method of the 3D printing apparatus of FIG. 1.
FIG. 3A to FIG. 3E are respectively partial schematic diagrams of the 3D printing apparatus.
FIG. 4 is a flowchart illustrating a 3D printing method according to another embodiment of the disclosure.
FIG. 5 is a partial schematic diagram of one state of the flow of FIG. 4.

### DESCRIPTION OF EMBODIMENTS

Reference will now be made in detail to the present preferred embodiments of the disclosure, examples of which are illustrated in the accompanying drawings. Wherever possible, the same reference numbers are used in the drawings and the description to refer to the same or like parts.

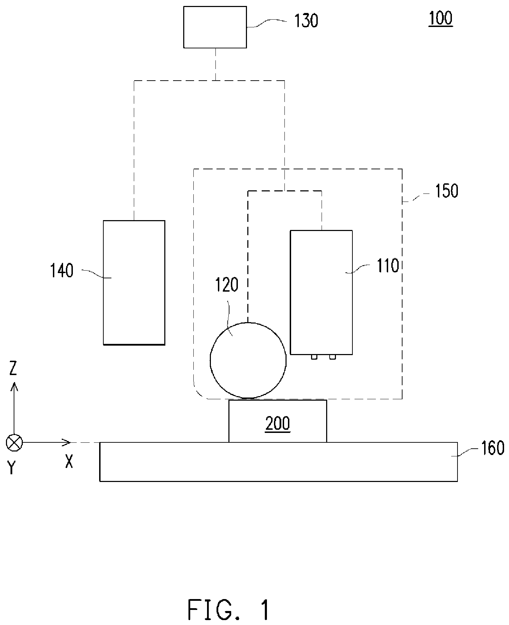

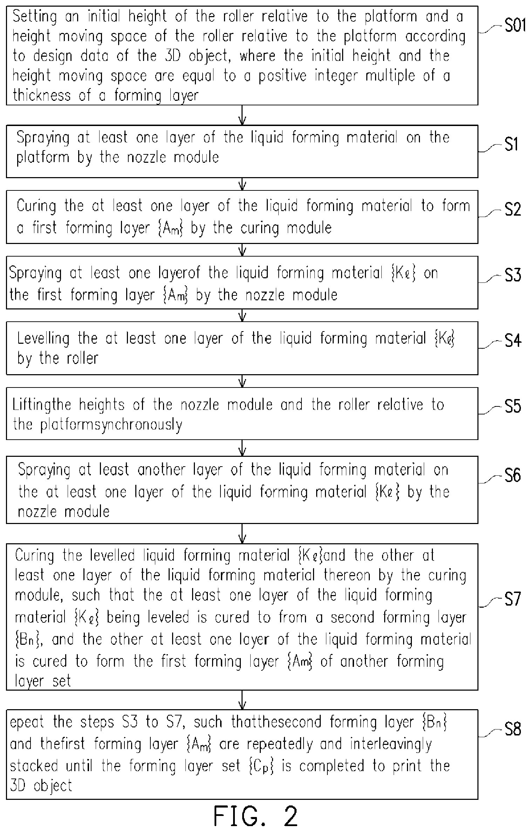

FIG. 1 is a schematic diagram of a three-dimensional (3D) printing apparatus according to an embodiment of the disclosure. FIG. 2 is a flowchart illustrating a 3D printing method of the 3D printing apparatus of FIG. 1. Cartesian coordinates X, Y, Z are provided to describe the components, where a surface of a platform 160 is conformed to an X-Y plane. Referring to FIG. 1 and FIG. 2, in the present embodiment, the 3D printing apparatus 100 includes the platform 160, a nozzle module 110, a roller 120, a curing module 140 and a control module 130, where the nozzle module 110, the roller 120 and the curing module 140 are disposed above the platform 160, and the control module 130 is electrically connected to the nozzle module 110, the roller 120 and the curing module 140. The 3D printing apparatus 100 is, for example, a stereolithography (SL) apparatus or a digital light processing (DLP) apparatus, in which the control module 130 drives the nozzle module 110 and the roller 120 to provide (spray) a liquid forming material, for example, photosensitive resin on the platform 160, and then the control module 130 drives the curing module 140, for example, an (ultraviolet) light curing device to irradiate the liquid forming material on the platform 160 to achieve a curing effect (solidified), and the cured forming layers are stacked layer-by-layer to form a 3D object, so as to complete the 3D printing operation of the present embodiment.

However, as the existing technique is limited by factors such as a mechanism assembling tolerance and self accuracy, it is hard to control a thickness of the cured forming layer, especially during a process when the photosensitive resin is irradiated by light to cure, a volume thereof is generally decreased, and meanwhile it is not easy to conveniently control the thickness of each layer of the forming layers due to differences of light conditions and environments, so that an effective control method is required to resolve the above problem.

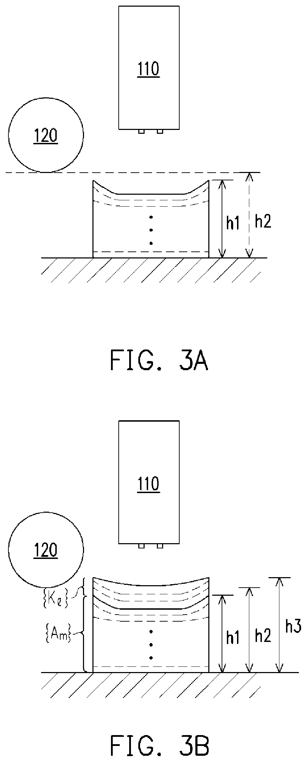

According to the above description, the disclosure provides a 3D printing method to overcome the aforementioned problem. FIG. 3A to FIG. 3E are respectively partial schematic diagrams of the 3D printing apparatus to describe the 3D printing method of the present embodiment. Referring to FIG. 2 for comparing with FIG. 3A to FIG. 3E one by one.

First, in step S01, an initial height of the roller 120 relative to the platform 160 and a moving pitch in height of the roller 120 relative to the platform 160 are set according to design data of the 3D object, where the initial height and the moving pitch in height are equal to a positive integer multiple of a thickness of a forming layer. Namely, the height of the roller 120 relative to the platform 160 is first set according to the layer number of the forming layers based on the design data of the 3D object. Then, the roller 120 successively (circularly) departs from the platform 160 in the aforementioned height, which is described in detail later.

Then, in step S1 and S2, referring to FIG. 3A, the control module 130 drives the nozzle module 110 to spray at least one layer of the liquid forming material on the platform 160, and the control module 130 drives the curing module 140 to irradiate and cure the at least one layer of the liquid forming material, so as to form a first forming layer {Aₘ}, where m is a positive integer. Under an ideal state, the first forming layer {Aₘ} has a fixed thickness, such that printing of the 3D object can be completed as long as the user provides and cures the first forming layers {Aₘ} layer by layer. However, as described above, limited by the situation that the liquid forming material is probably shrunk during the curing process, as shown in FIG. 3A, a thickness h1 of the cured first forming layer {Aₘ} is actually smaller than an expected thickness h2. The aforementioned and aftermentioned thickness and height are all sizes measured along a Z-axis. It should be noted that when the liquid forming material used for forming the first forming layer {Aₘ} is sprayed, the roller 120 is still required to level the liquid forming material in the aforementioned height firstly.

The 3D object 200 is regarded to be constructed by forming layer sets {Cₚ} (C₁, C₂, ..., Cₚ counted from the surface of the platform 160), where p is a positive integer, so that the thickness of each of the forming layer sets C₁, C₂, ..., Cₚ is the expected thickness h2.

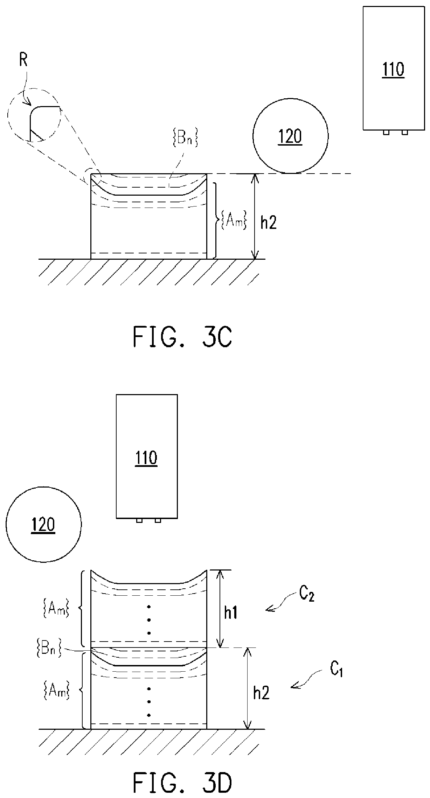

Therefore, in step S3, referring to FIG. 3B, the control module 130 drives the nozzle module 110 to spray at least one layer of the liquid forming material (which is represented by liquid forming material {K_{ℓ}}, where ℓ is a positive integer) on the first forming layer {Aₘ}, and the first forming layer {Aₘ} and the liquid forming material {K_{ℓ}} reaches a thickness h3, where the thickness h3 is greater than the thickness h1, and the thickness h3 is also greater than the thickness h2. Then, in step S4, referring to FIG. 3C, the control module 130 drives the roller 120 to level the liquid forming material {K_{ℓ}}, and the first forming layer {Aₘ} and the levelled (remained) liquid forming material reaches the thickness h2. Then, in step S5, referring to FIG. 3D, the control module 130 synchronously lifts the heights of the nozzle module 110 and the roller 120 relative to the platform 160, and in step S6, the control module 130 drives the nozzle module 110 to spray at least another layer of the liquid forming material on the aforementioned levelled liquid forming material. In step S7, the control module 130 drives the curing module 140 to cure the levelled liquid forming material set and the other at least one layer of the liquid forming material thereon, such that the levelled liquid forming material can be smoothly cured to form a second forming layer {Bₙ}, and the second forming layer {Bₙ} is combined with the aforementioned first forming layer {Aₘ} to form a forming layer set (as shown by the figure, and the first forming layer set C₁ on the surface of the platform 160 is taken as an example for description), and the other at least one layer of the liquid forming material is cured to form the first forming layer {Aₘ} of another forming layer set (which is the forming layer set C₂ according to the aforementioned description), where n is a positive integer, and m>n. It should be noted that the first forming layer {Aₘ} is a basic forming layer, and the second forming layer {Bₙ} is a compensation forming layer. Namely, the combination of the basic forming layer and the compensation forming layer is the expected forming layer of the design data, and then the aforementioned steps are repeated to print different layers of the forming layers until the 3D object is completed, where the roller 120 respectively levels the basic forming layer and the compensation forming layer in the same height within a same cycle, and then the roller 120 gradually departs from the platform 160 with a moving pitch of the aforementioned height.

Further, a measure adopted in the step S3 of the present embodiment is to again spray the liquid forming material {K_{ℓ}} on the shrunk first forming layer {Aₘ}, where ℓ is smaller than m, which is equivalent to provide the liquid forming material {K_{ℓ}} to compensate the inadequate thickness of the first forming layer {Aₘ}, and meanwhile provide effective improvement for defects of the flatness of a top part of the first forming layer {Aₘ} and a surface profile of the first forming layer {Aₘ}. Since only the aforementioned defects are required to be overcome, the liquid forming material {K_{ℓ}} is unnecessary to achieve the layer number and thickness as that of the first forming layer {Aₘ}, and the thickness (i.e. the thickness h3) of the first forming layer {Aₘ} and the liquid forming material {K_{ℓ}} is only required to be slightly greater than the aforementioned expected thickness h2. In the present embodiment, the first forming layer {Aₘ} is about 15 layers (A₁, A₂, ..., A₁₅), and the liquid forming material {K_{ℓ}} is only about 3 layers (K1, K2, K3) to achieve the required compensation effect, though the disclosure is not limited thereto, and the number of layers is determined by factors such as the material of the liquid forming material, the lighting effect provided by the curing module 140 and the environment, etc. Therefore, in the subsequent step S4, the roller 120 may smoothly remove a part of the liquid forming material {K_{ℓ}} that is higher than the thickness h2, such that the first forming layer {Aₘ} and the remained liquid forming material may reach the expected thickness h2. A height of the roller 120 relative to the platform 160 is lower than a height of the nozzle module 110 relative to the platform 160, and the height of the roller 120 relative to the platform 160 is equal to a thickness of the forming layer set C₁, and a lifting height of the nozzle module 110 and the roller 120 driven by the control module 130 (the moving pitch in height) is also equal to any thickness of the forming layer set C₂, ..., Cₚ. In this way, both of the roller 120 and the nozzle module 110 may gradually depart from the platform 160 in a fixed height space (i.e. the thickness of each of the forming layer sets). Meanwhile, the capability of the nozzle module 110 for spraying the liquid forming material is higher than the thickness of each of the forming layer sets, such that the spraying nozzle set 110 may smoothly complete spraying one forming layer set at each height space.

Moreover, the roller 120 and the nozzle module 110 are synchronous to each other, so as to smoothly implement the aforementioned height lifting. Particularly, the nozzle module 110 forms a first orthogonal projection profile on the platform 160, the roller 120 forms a second orthogonal projection profile on the platform 160, during the process that the nozzle module 110 is moved relative to the platform 160, the first orthogonal projection profile and the second orthogonal projection profile keep a fixed space (distance therebetween is fixed). Namely, the nozzle module 110 and the roller 120 do not have a relative movement during the process moving above the X-Y plane on the platform 160. Preferably, referring to FIG. 1, the 3D printing apparatus 100 of the present embodiment further includes an integration mechanism 150, and the nozzle module 110 and the roller 120 are all disposed on the integration mechanism 150, and the control module 130 is electrically connected to the integration mechanism 150 for driving. In this way, the effect that the nozzle module 110 and the roller 120 synchronously move can be smoothly achieved.

On the other hand, referring to FIG. 3C and FIG. 3D, the remained part of the liquid forming material {K_{ℓ}} obtained after the liquid forming material {K_{ℓ}} is levelled by the roller 120 is used for compensating the inadequate part of the first forming layer {Aₘ}. It should be noted that at the moment shown in FIG. 3D, the curing module 140 (not shown in the figure) is additionally driven to simultaneously cure the levelled liquid forming material (which is indicated by dot lines in FIG. 3C to represent that it is not cured) and the first forming layer {Aₘ} belonging to the forming layer set C₂. Since the curing energy provided by the curing module 140 is greater than the energy required for curing one forming layer set, and since the photosensitive resin has a chain reaction for the light curing, i.e. regarding two adjacent parts of the photosensitive resin, one part is indirectly cured due to that another part is cured, the curing operation of the second forming layer {Bₙ} of the forming layer set C₁ and the first forming layer {Aₘ} of the forming layer set C₂ can be simultaneously completed in the step S7.

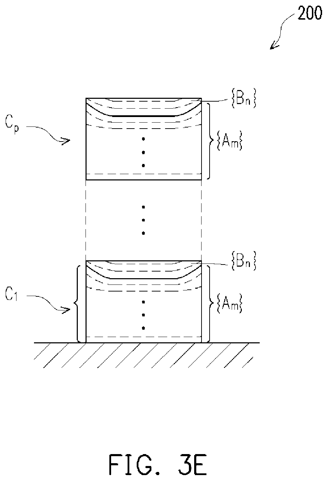

In this way, in step S8, the steps S3 to S7 are repeated, such that the second forming layer {Bₙ} and the first forming layer {Aₘ} are repeatedly and interleavingly stacked until the forming layer set {Cₚ} is completed to print the 3D object 200, as shown in FIG. 3E. Deduced by analogy, the same to the aforementioned forming layer set C₁ and the forming layer set C₂, during the process of stacking the forming layer sets, the compensation layer (the cured second forming layer {Bₙ}) of a previous forming layer set (for example, Cₛ) and the first forming layer {Aₘ} of a subsequent forming layer set (for example, Cₛ₊₁) are cured together, where s is a positive integer and s+1 is smaller than or equal to p.

It should be noted that the liquid forming material shown in FIG. 3C is still not cured, so that certain mobility thereof is maintained, and a cross section of the cured second forming layer {Bₙ} has a round angle R.

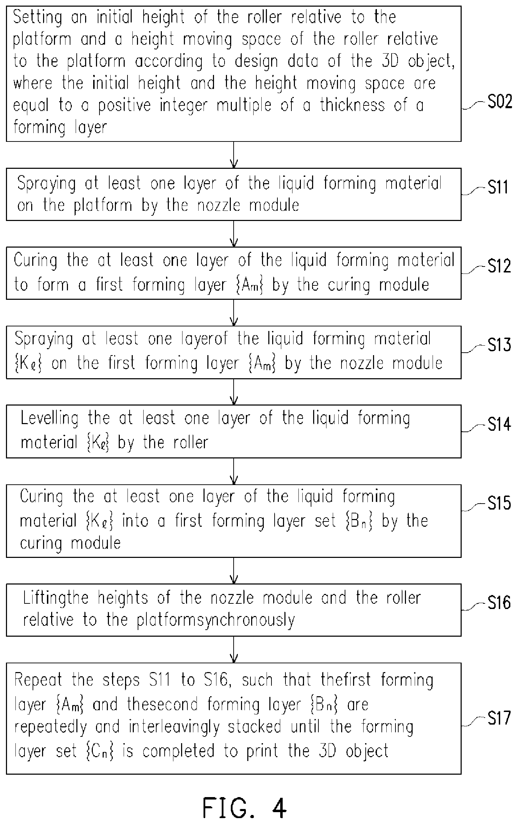

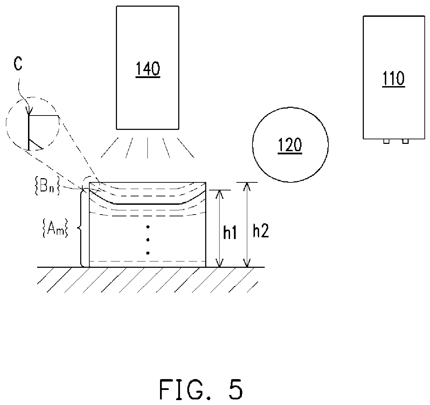

FIG. 4 is a flowchart illustrating a 3D printing method according to another embodiment of the disclosure. FIG. 5 is a partial schematic diagram of one state of the flow of FIG. 4. Referring to FIG. 4 and FIG. 5, in the present embodiment, the flow is also adapted to the 3D printing apparatus 100 of FIG. 1, and the same to the aforementioned step S01, in step S02, an initial height of the roller 120 relative to the platform 160 and a moving pitch in height of the roller 120 relative to the platform 160 are first set according to design data of the 3D object, where the initial height and the moving pitch in height are equal to a positive integer multiple of a thickness of the forming layer. The contents of the steps S 11-S 14 are the same to that of the steps S1-S4, and details thereof are not repeated. Different to the aforementioned embodiment, when the step S14 of levelling the liquid forming material {K_{ℓ}}, in step S15, the curing module 140 is driven to cure the levelled liquid forming material, so as to form the second forming layer {Bₙ} for combining with the first forming layer {Aₘ} to from a forming layer set. Then, in step S16, the nozzle module 110 and the roller 120 are driven to synchronously lifted, and in step S17, the aforementioned steps S11-S16 are repeated, and the first forming layer {Aₘ} and the second forming layer {Bₙ} are repeatedly and interleavingly stacked until the forming layer set {Cₚ} is completed to print the 3D object 200, as shown in FIG. 3E.

It should be noted that since the liquid forming material {K_{ℓ}} is immediately cured after it is levelled, i.e. the liquid forming material is cured before it flows, so that a cross section of the second forming layer {Bₙ} has a corner angle C.

In summary, according to the 3D printing method of the disclosure, by providing additionally compensation to the shrunk first forming layer {Aₘ}, i.e. the liquid forming material is further sprayed on the first forming layer {Aₘ} to compensate the inadequate part of the thickness, and meanwhile the surface profile of the top part of the first forming layer {Aₘ} is effectively levelled to improve the levelness thereof, during the process that the 3D printing apparatus smoothly prints the 3D object, the thickness and quality of each forming layer set are guaranteed, so as to provide a convenient control method to overcome adverse effects caused by assembling tolerance and curing conditions of the material and related components.

In one of the printing methods, the second forming layer {Bₙ} of the previous forming layer set and the first forming layer {Aₘ} of the subsequent forming layer set can be cured together, such that the cross section of the second forming layer {Bₙ} has the round angle, and the surface of the 3D object is comparatively rounded. In the other printing method, each time after the liquid forming material serving as the second forming layer {Bₙ} is sprayed, it is immediately cured, such that the cross section of the second forming layer {Bₙ} has the corner angle, and the 3D object has better profile contrast. In this way, a user may adopt the corresponding printing method according to a required feature of the 3D object.

It will be apparent to those skilled in the art that various modifications and variations can be made to the structure of the disclosure without departing from the scope or spirit of the disclosure. In view of the foregoing, it is intended that the disclosure cover modifications and variations of this disclosure provided they fall within the scope of the following claims and their equivalents.

## Claims

1. A three-dimensional (3D) printing method adapted to a 3D printing apparatus (100) to print a 3D object (200), wherein the 3D object (200) comprises at least one forming layer, and the 3D printing apparatus (100) comprises a platform (160), a nozzle module (110), a roller (120) and a curing module (140), the 3D printing method comprising:
setting a height of the roller (120) relative to the platform (160) according to a layer number of the forming layers based on design data of the 3D object (200);
spraying at least one layer of a liquid forming material on the platform (160) by using the nozzle module (110);
driving the roller (120) to level the at least one layer of the liquid forming material in the height;
curing the at least one layer of the liquid forming material into a basic forming layer by using the curing module (140);
spraying at least one layer of the liquid forming material on the basic forming layer by using the nozzle module (110); and
driving the roller (120) to level the at least one layer of the liquid forming material on the basic forming layer in the height.

2. The 3D printing method as claimed in claim 1, wherein the forming layers comprise a basic forming layer {Aₘ} and a compensation forming layer {Bₙ}, wherein m, n are respectively positive integers, and m>n, and the 3D printing method further comprises:
curing the levelled at least one layer of the liquid forming material to form the compensation forming layer {Bₙ} by using the curing module (140); and
driving the roller (120) to gradually depart from the platform (160) in a space of the height, so as to repeatedly and interleavingly stack the basic forming layer {Aₘ} and the compensation forming layer {Bₙ} until the 3D object (200) is printed.

3. The 3D printing method as claimed in claim 2, further comprising:
synchronously lifting the nozzle module (110) and the roller (120) in the space of the height.

4. The 3D printing method as claimed in claim 2 or 3, wherein a cross section of the compensation forming layer {Bₙ} has a corner angle (C).

5. The 3D printing method as claimed in any of the claims 1 to 4, wherein the 3D object (200) comprise a basic forming layer {Aₘ} and a compensation forming layer {Bₙ}, wherein m, n are respectively positive integers, and m>n, and the 3D printing method further comprises:
spraying another at least one layer of the liquid forming material on the levelled at least one layer of the liquid forming material;
curing the levelled at least one layer of the liquid forming material and the other at least one layer of the liquid forming material thereon by using the curing module (140), wherein the levelled at least one layer of the liquid forming material is cured to form the compensation forming layer {Bₙ}, and the other at least one layer of the liquid forming material is cured to form another basic forming layer {Aₘ}; and
driving the roller (120) to gradually depart from the platform (160) in a space of the height, so as to repeatedly and interleavingly stack the compensation forming layer {Bₙ} and the basic forming layer {Aₘ} until the 3D object (200) is printed.

6. The 3D printing method as claimed in claim 5, wherein after the at least one layer of the liquid forming material is leveled, the nozzle module (110) and the roller (120) are synchronously lifted in the space of the height, so as to spray another at least one layer of the liquid forming material on the levelled at least one layer of the liquid forming material.

7. The 3D printing method as claimed in claim 5 or 6 , wherein a cross section of the compensation forming layer {Bₙ} has a round angle (R).

8. The 3D printing method as claimed in any of the claims 1 to 7, wherein the roller (120) and the nozzle module (110) are synchronously moved.

9. The 3D printing method as claimed in claim 8, wherein the nozzle module (110) forms a first orthogonal projection profile on the platform (160), the roller (120) forms a second orthogonal projection profile on the platform (160), and during a process that the nozzle module (110) is moved relative to the platform (160), the first orthogonal projection profile and the second orthogonal projection profile keep a fixed space therebetween.

10. The 3D printing method as claimed in any of the claims 1 to 9, wherein a height of the roller (120) relative to the platform (160) is lower than a height of the nozzle module (110) relative to the platform (160).

11. The 3D printing method as claimed in any of the claims 2 to 10, wherein curing energy provided by the curing module (140) is greater than energy required for curing one forming layer.
